# FASCICULE DE BREVET EUROPEEN

(11) **EP 2 674 362 B1**
(45) Date de publication et mention de la délivrance du brevet: **12.08.2015**
(21) Numéro de dépôt: 13170780.4
(22) Date de dépôt: 06.06.2013
(51) Int. Cl.: B64D 29/06, E05C 19/14

(54) **Verrou à crochet**
Bolzenschließvorrichtung
Pawl lock

(30) Priorité: 11.06.2012 FR 1255417
(43) Date de publication de la demande: 18.12.2013
(73) Titulaire: Lisi Aerospace, 75583 Paris Cedex 12 (FR)
(72) Inventeur: DEFRANCE, Vincent, 18000 BOURGES (FR)
(74) Mandataire: Maupilier, Didier

(56) Documents cités:
- FR-A1- 2 966 490
- US-A- 4 053 177
- US-A- 4 318 557
- US-A- 4 768 815

## Description

L'invention se rapporte à un verrou à crochet à genouillère.

Plus précisément, l'invention concerne un verrou à crochet destiné au verrouillage et au déverrouillage d'une structure mobile sur une structure fixe d'un véhicule, par exemple du type aéronef, dont la cinématique d'ouverture et de fermeture repose sur l'utilisation d'une combinaison de deux genouillères.

Il est connu de l'art antérieur un verrou à crochet comportant une combinaison de deux genouillères. Un tel verrou est par exemple décrit dans le document US 4 318 557 et représenté à la figure 1.

Un tel verrou 100 comporte un bras 101 de verrouillage comprenant un crochet 102 apte à s'accrocher à un axe 103 d'accroche solidaire d'une structure 104, une poignée 105 portant un premier axe 106 de liaison pivot autour duquel le bras 101 de verrouillage est guidé en rotation, et un deuxième axe 107 de liaison pivot parallèle au premier axe 106 et disposé entre une paroi 108 de la poignée 105 et une face 109 du bras 101 de verrouillage parallèles au deuxième axe 107. Le verrou 100 comporte une première bielle 110 reliant le premier axe 106 de liaison pivot au deuxième axe 107 de liaison pivot et une deuxième bielle 111 reliant le deuxième axe 107 de liaison pivot à un troisième axe 112 de liaison pivot parallèle au deuxième axe 106 et porté par la structure 104, le quatrième axe 112 étant disposé entre la paroi 108 de la poignée 105 et la face 109 du bras 101 de verrouillage.

Une première genouillère est formée par les première et deuxième bielles (110, 111), et est articulée autour du deuxième axe 107 de liaison pivot. La première genouillère est considérée comme serrée, lorsque le deuxième axe 107 est situé en dessous d'un plan 113 formé par les premier et troisième axes (106, 112). La première genouillère se desserre dès que le deuxième axe 107 passe au-dessus du plan 113.

Une deuxième genouillère est formée entre l'axe 103 d'accroche et le troisième axe 112 de liaison pivot, et est articulée autour du premier axe 106 de liaison pivot. La deuxième genouillère est considérée comme serrée tant que la première genouillère est elle-même serrée.

L'utilisation d'une deuxième genouillère permet d'assurer une avancée importante du crochet 102 par rapport à l'axe 103 d'accroche, lors du déverrouillage du verrou 100, le premier axe 106 de liaison pivot étant disposé loin de l'axe 103 d'accroche. L'utilisation d'une deuxième genouillère permet également de limiter un encombrement du verrou 100, puisque, lorsque la première genouillère se desserre, le premier axe 106 de liaison pivot bascule vers un plan 114 formé par l'axe 103 d'accroche et le troisième axe 112 de liaison pivot, sans jamais le dépasser.

Un tel verrou impose cependant à la paroi 108 de la poignée 105 de présenter un grand rayon de courbure. En effet, il est nécessaire, avec un tel verrou, que le premier axe 106 soit non seulement placé loin de l'axe 103 d'accroche, mais aussi suffisamment au-dessus du plan 114 pour reprendre des efforts s'exerçant sur l'axe 103 d'accroche et/ou le troisième axe 112, par exemple engendrés par des vibrations ou des chocs, afin de garantir le maintien de la première genouillère en position serrée. Par conséquent, un tel verrou ne peut pas être intégré à une structure présentant un petit rayon de courbure.

Il existe donc un besoin de développer un verrou permettant d'assurer à la fois une avancée importante du crochet par rapport à l'axe d'accroche, et une intégration dudit verrou à des structures présentant un petit rayon de courbure.

Un aspect de la présente invention permet de résoudre ce problème technique.

Plus précisément, l'invention se rapporte à un verrou pour le verrouillage et le déverrouillage d'une structure mobile sur une structure fixe d'un véhicule, l'une des deux structures portant un premier axe d'accroche, l'autre structure portant un deuxième axe de liaison pivot autour duquel le verrou est apte à pivoter. Le verrou comporte :
- un bras de verrouillage comprenant un crochet apte à s'accrocher au premier axe d'accroche ;
- une poignée portant un troisième axe de liaison pivot, autour duquel le bras de verrouillage est apte à être guidé en rotation, le deuxième axe de liaison pivot étant disposé du côté de la poignée par rapport à un plan formé entre le premier axe d'accroche et le troisième axe de liaison pivot ; la poignée portant en outre un quatrième axe de liaison pivot, disposé entre la poignée et une première face du bras de verrouillage ;
- une première bielle reliant le troisième axe de liaison pivot au quatrième axe de liaison pivot ; et,
- une deuxième bielle reliant le quatrième axe de liaison pivot au deuxième axe de liaison pivot, la deuxième bielle comprenant en outre un cinquième axe disposé contre une deuxième face du bras de verrouillage opposée à la première face.

Un tel verrou présente l'avantage de pouvoir être adapté à une structure présentant un petit rayon de courbure, tout en assurant une avancée importante du crochet par rapport à l'axe d'accroche.

Préférentiellement, la deuxième bielle est sensiblement en forme de L.

Préférentiellement, le cinquième axe est apte à glisser sur la deuxième face du bras de verrouillage, lorsque le crochet vient s'accrocher ou se décrocher de l'axe d'accroche.

Selon un mode de réalisation de l'invention, le bras de verrouillage comporte une partie distale opposée au crochet, comprenant une rainure formant une première butée apte à bloquer le deuxième axe en translation en direction du crochet, et une deuxième butée apte à bloquer en translation ledit deuxième axe dans une direction opposée au crochet.

Une longueur de la deuxième bielle peut alors être avantageusement définie de sorte que, lorsque le crochet est accroché à l'axe d'accroche, le deuxième axe est en appui contre la première butée.

Une longueur de la deuxième bielle peut également être avantageusement définie de sorte que, lorsque le crochet n'est pas accroché à l'axe d'accroche, le deuxième axe est en appui contre la deuxième butée.

Préférentiellement, la poignée comprend des parois latérales présentant chacune une ouverture oblongue, le quatrième axe de liaison pivot étant apte à coulisser dans lesdites ouvertures.

Préférentiellement, la deuxième face présente un profilé sensiblement convexe, depuis une première extrémité située à proximité du crochet jusqu'à une deuxième extrémité opposée à ladite première extrémité, située à proximité du troisième axe de liaison pivot.

Selon un mode de réalisation de l'invention, le cinquième axe est relié à une bielle de commande, apte à commander le déclenchement d'un mécanisme adjacent lorsque le verrou est enclenché dans une position de verrouillage ou de déverrouillage.

L'invention sera mieux comprise à la lecture de la description qui suit et à l'examen des figures qui l'accompagnent. Celles-ci sont données à titre indicatif et nullement limitatif de l'invention. Les figures montrent :
- Figure 1 (déjà décrite) : une vue de profil d'un verrou à crochet connu de l'art antérieur ;
- Figure 2 : une vue en perspective d'un verrou à crochet en position dite verrouillée avec une poignée en position dite fermée, selon un mode de réalisation de l'invention ;
- Figure 3 : une vue de profil du verrou à crochet en position verrouillée avec la poignée en position fermée, selon le mode de réalisation de l'invention de la figure 2 ;
- Figure 4 : une vue de profil du verrou à crochet en position verrouillée avec la poignée en position dite partiellement ouverte, selon le mode de réalisation de l'invention de la figure 2 ;
- Figure 5 : une vue de profil du verrou à crochet dans une position dite déverrouillée, selon le mode de réalisation de l'invention de la figure 2;
- Figure 6: une vue de profil d'un verrou à crochet en position verrouillée avec une poignée en position partiellement ouverte, selon un autre mode de réalisation de l'invention.

Sur les différentes figures, les éléments identiques conservent les mêmes références.

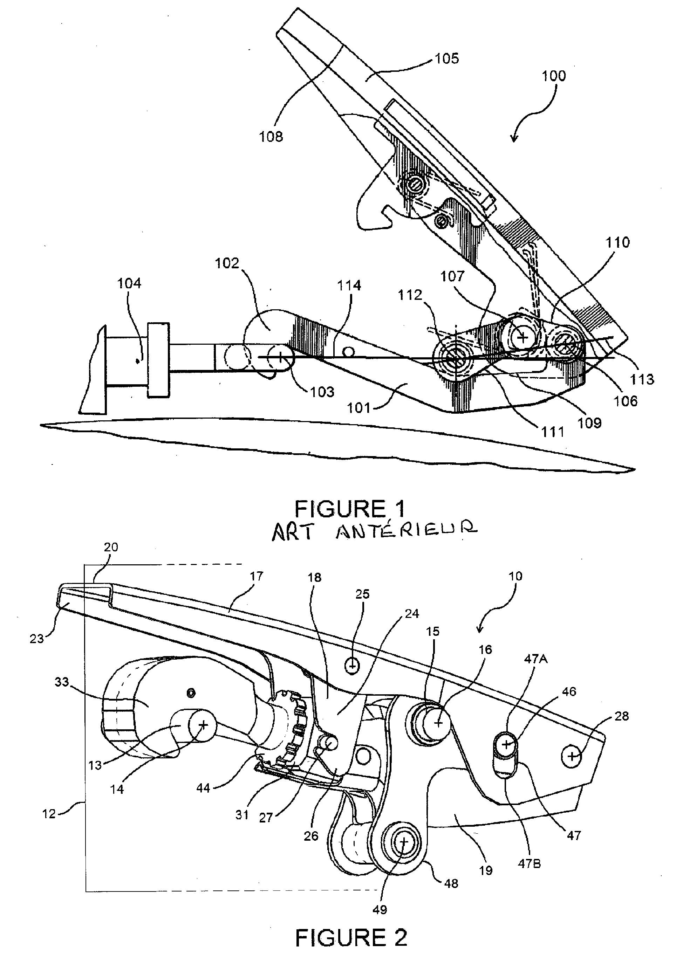

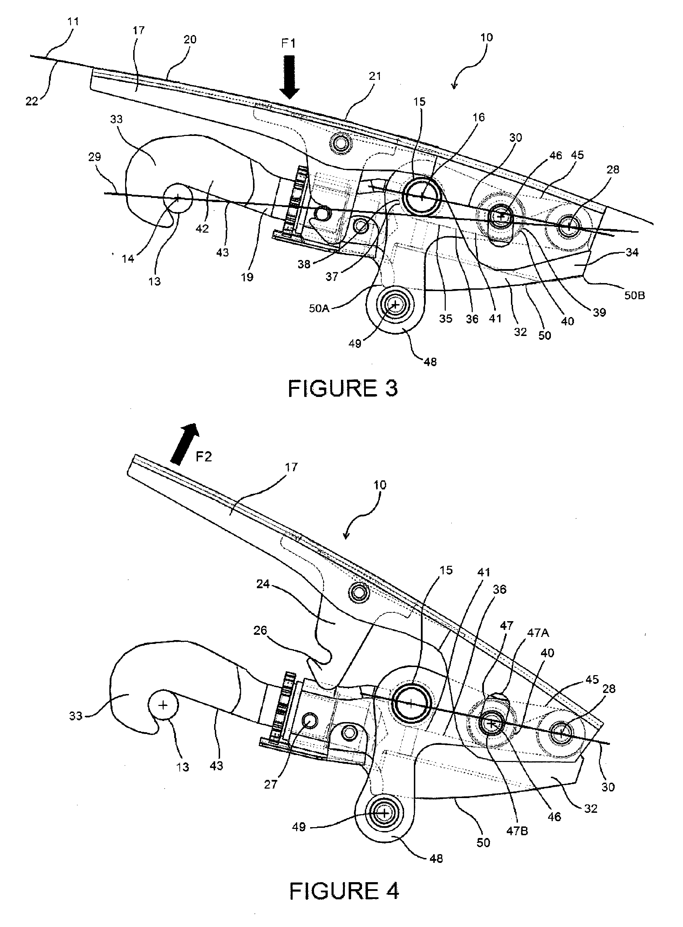

Les figures 2 et 3 représentent respectivement une vue en perspective et une vue de profil d'un verrou 10 à crochet selon un mode de réalisation de l'invention. Dans les figures 2 et 3, le verrou 10 est dans une position dite verrouillée.

Le verrou 10 est configuré de sorte à verrouiller et déverrouiller une structure mobile (non représentée) sur une structure 11 fixe d'un véhicule du type aéronef. La structure 11 fixe est par exemple le fuselage d'un avion, et la structure mobile est par exemple une trappe.

Dans l'exemple, le verrou 10 est positionné de sorte à verrouiller une structure mobile sur une structure 11 fixe d'un aéronef. Le verrou 10 présente dans la direction longitudinale un plan 12 de symétrie, le traversant en son milieu.

La structure 11 fixe comporte une première ferrure (non représentée) dont une tige 13 de section circulaire, s'étendant selon un premier axe 14 transversal, forme un axe d'accroche du verrou 10.

La structure mobile comporte une deuxième ferrure (non représentée) dont une barre 15, s'étendant suivant un deuxième axe 16 sensiblement parallèle au premier axe 14, forme un axe de liaison pivot autour duquel le verrou 10 est apte à être guidé en rotation par rapport à la structure mobile.

On notera que l'axe 14 d'accroche peut également être disposé sur la structure mobile, tandis que le deuxième axe 16 de liaison pivot peut être disposé sur la structure 11 fixe. Une telle disposition de l'axe 14 d'accroche et du deuxième axe 16 n'affecte en rien la description qui suit.

Le verrou 10 comporte classiquement une poignée 17 munie d'une gâchette 18 encastrée, ainsi qu'un bras 19 de verrouillage.

La poignée 17 et la gâchette 18 présentent chacune une paroi 20 et 21, respectivement, de forme sensiblement complémentaire à une surface de la structure mobile et/ou à une surface 22 de la structure 11 fixe, de sorte que, lorsque le verrou 10 est en position verrouillée et la poignée 17 en position dite fermée, les parois (20, 21) affleurent la surface de la structure mobile et/ou la surface 22 de la structure 11 fixe.

La poignée 17 et la gâchette 18 présentent également une paire de parois latérales planes 23 et 24, respectivement, sensiblement parallèles au plan 12 de symétrie.

La poignée 17 comporte entre ses deux parois 23 latérales un axe 25 de liaison pivot, autour duquel la gâchette 18 peut pivoter. La gâchette 18 est également munie d'un premier ressort de torsion (non représenté) s'opposant à la rotation de la gâchette 18 autour de cet axe 25.

Les parois 24 latérales de la gâchette 18 présentent chacune un crochet 26 apte à s'accrocher à des ergots 27 disposés sur le bras 19 de verrouillage, de part et d'autre du plan 12 de symétrie.

La poignée 17 comporte en outre entre ses parois 23 latérales un troisième axe 28 de liaison pivot, sensiblement parallèle aux premier et deuxième axes (14, 16), autour duquel le bras 19 de verrouillage est apte à être guidé en rotation.

L'axe 14 d'accroche et le troisième axe 28 de liaison pivot définissent ensemble un premier plan 29. Le deuxième axe 16 de liaison pivot est disposé du côté de la poignée 17 par rapport au premier plan 29, quelle que soit la position du verrou 10.

Le deuxième et le troisième axe (16, 28) définissent ensemble un deuxième plan 30.

Le bras 19 de verrouillage présente une partie 31 centrale de forme sensiblement cylindrique suivant l'axe longitudinal du verrou 10. La partie 31 centrale se prolonge, d'un côté, par une partie 32 dite distale et de l'autre côté, par un crochet 33.

Le crochet 33 est apte à s'accrocher à la tige 13 qui forme l'axe 14 d'accroche de la structure 11 fixe. Lorsque le crochet 33 est accroché à la tige 13, le verrou 10 est considéré comme verrouillé. A contrario, lorsque le crochet 33 n'est pas accroché à la tige 13, le verrou 10 est considéré comme déverrouillé.

Une extrémité 34 de la partie 32 distale, disposée à l'opposé du crochet 33, accueille le troisième axe 28.

Une première face 35 de la partie 32 distale, en vis-à-vis de la paroi 20 de la poignée 17, présente une rainure 36 débouchante, disposée selon un axe sensiblement parallèle au troisième axe 28.

Une première face 37 de la rainure 36, à proximité de la partie 31 centrale, forme une première butée 38 contre laquelle la barre 15 vient se loger lorsque le verrou 10 est en position verrouillée. La première butée 38 est apte à bloquer une translation de la barre 15, relativement au bras 19 de verrouillage, en direction du crochet 33.

Une deuxième face 39 de la rainure 36, à proximité de l'extrémité 34 de la partie 32 distale, forme une deuxième butée 40 contre laquelle la barre 15 vient se loger lorsque le verrou 10 est déverrouillé. La deuxième butée 40 est apte à bloquer une translation de la barre 15 relativement au bras 19 de verrouillage, en direction de l'extrémité 34 de la partie 32 distale.

Une troisième face 41 de la rainure 36, en vis-à-vis de la paroi 20 de la poignée 17, est apte à glisser sur la barre 15, lorsque le verrou 10 passe de la position verrouillée à la position déverrouillée, et vice versa.

Le crochet 33 comporte en outre une portion 42 sensiblement linéaire, présentant une paroi 43, apte à glisser sur la tige 13.

Dans l'exemple, le verrou comprend au sein de la partie 31 centrale un trou borgne à l'intérieur duquel le crochet 33 s'insère par l'intermédiaire d'une pièce 44 d'ajustement, par exemple un écrou. La pièce 44 d'ajustement permet d'ajuster l'enfoncement du crochet 33 au sein de la partie 31 centrale du bras 19 de verrouillage, et ainsi d'ajuster la tension entre la tige 13 et le crochet 33. Cependant, le bras 19 de verrouillage pourrait également être monobloc, sans pièce d'ajustement.

Le verrou 10 comporte en outre une première bielle 45 connectant le troisième axe 28 de liaison pivot avec un quatrième axe 46 de liaison pivot, disposé sensiblement parallèlement au troisième axe 28.

Le quatrième axe 46 de liaison pivot traverse sur chacune des parois 23 latérales de la poignée 17 une ouverture 47 oblongue, présentant deux extrémités opposées 47A et 47B entre lesquelles le quatrième axe 46 peut coulisser. Ainsi, en position verrouillée, le quatrième axe 46 est en contact avec une première extrémité 47A, tandis que lorsque le verrou 10 est déverrouillé et la poignée 17 est dite partiellement ou totalement ouverte, le quatrième axe 46 est en contact avec une deuxième extrémité 47B de l'ouverture 47 oblongue. L'ouverture 47 oblongue entraîne en translation le quatrième axe 46, lorsque la poignée 17 est en rotation autour du troisième axe 28.

Le verrou 10 comporte également une deuxième bielle 48 connectant le quatrième axe 46 de liaison pivot avec le deuxième axe 16 de liaison pivot.

Une longueur de la première bielle 45 et une longueur de la deuxième bielle 48 sont définies de sorte que le quatrième axe 46 est en appui contre la deuxième butée 40 lorsque le verrou 10 est verrouillé.

Le verrou 10 est configuré de sorte que la paroi 20 de la poignée 17 est disposée à l'opposé du quatrième axe 46 par rapport au deuxième plan 30, c'est-à-dire que le quatrième axe 46 est situé en-dessous du deuxième plan 30 reliant le troisième axe 28 au deuxième axe 16, lorsque le verrou 10 est verrouillé.

Ainsi, lorsque le verrou 10 est verrouillé, une première genouillère, formée par les première et deuxième bielles (45, 48) et articulée autour du quatrième axe 46 de liaison pivot, est en position dite serrée.

De cette manière, la paroi 20 de la poignée 17 et la paroi 21 de la gâchette 18 sont aptes à épouser des surfaces de la structure mobile et de la structure 11 fixe présentant un petit rayon de courbure. De plus, l'axe 14 d'accroche et le deuxième axe 16 de liaison pivot peuvent être placés au plus près des structures fixes et mobiles, réduisant ainsi la longueur des ferrures portant lesdits axes et par conséquent leur poids.

Dans l'exemple, la deuxième bielle 48 est sensiblement en forme de L. La deuxième bielle 48 comporte deux biellettes disposées de part et d'autre du bras 19 de verrouillage, et connectées entre elles par un cinquième axe 49, sensiblement parallèle aux deuxième et quatrième axes (16, 46). Le cinquième axe 49 est en appui contre une deuxième face 50 de la partie 32 distale du bras 19 de verrouillage, opposée à la première face 35 de la partie 32 distale.

En position verrouillée, le cinquième axe 49 est positionné à une première extrémité 50A de la deuxième face 50, disposée à proximité de la partie 31 centrale du bras 19 de verrouillage. De préférence, la première extrémité 50A est disposée sensiblement au droit de la première butée 38.

Une distance entre les deuxième et cinquième axes (16, 49) dans le plan 12 de symétrie, correspondant à une longueur de la deuxième bielle 48 entre ces deux axes, est définie de sorte à reprendre des efforts s'exerçant sur l'axe 14 d'accroche et/ou sur le deuxième axe 16, lorsque le verrou 10 est verrouillé. Ainsi, le serrage de la première genouillère est assuré. En effet, dans la mesure où le deuxième axe 16 est disposé du côté de la poignée 17 par rapport au premier plan 29 quelle que soit la position du verrou 10, le troisième axe 28 de liaison pivot ne peut s'opposer au déplacement du bras 19 de verrouillage en direction de l'axe 14 d'accroche. En l'absence du cinquième axe 49, les efforts s'exerçant sur le troisième axe 28 auraient alors tendance à entraîner ce dernier vers l'intérieur de la structure de l'aéronef, faisant ainsi basculer le verrou 10 autour du deuxième axe 16 de liaison pivot. Le cinquième axe 49 s'oppose à ce mouvement en exerçant une force de réaction sur le bras 19 de verrouillage, permettant au verrou 10 de se maintenir en position verrouillée.

Le cinquième axe 49 est apte à glisser contre la deuxième face 50, depuis la première extrémité 50A jusqu'à une deuxième extrémité 50B opposée. De préférence, la deuxième extrémité 50B est disposée sensiblement au droit du troisième axe 28 de liaison pivot, contre laquelle le cinquième axe 49 repose lorsque le verrou est déverrouillé.

La deuxième face 50 joue le rôle d'une surface de came. La deuxième face 50 présente un profilé sensiblement convexe, reliant la première extrémité 50A à la deuxième extrémité 50B. Ainsi, lorsque la première genouillère est en position serrée et que le cinquième axe 49 est disposé au niveau de la première extrémité 50A, la deuxième genouillère est en position dite serrée.

Le déverrouillage du verrou 10 se déroule comme suit.

Un opérateur appuie dans un premier temps sur la gâchette 18 (figure 3, flèche F1), ce qui décroche, via l'action du premier ressort, les crochets 26 des ergots 27. Sous l'action d'un deuxième ressort (non représenté) et grâce à l'ouverture 47 oblongue, la poignée 17 s'écarte du bras 19 de verrouillage, en pivotant autour du troisième axe 28, et le quatrième axe 46, initialement au contact de la première extrémité 47A de l'ouverture 47 oblongue, coulisse dans l'ouverture 47 jusqu'à venir au contact de la deuxième extrémité 47B.

La poignée 17 reste alors bloquée en position partiellement ouverte, représentée à la figure 4. Dans cette position, la première et la deuxième genouillère sont toujours en position serrée, le crochet 33 est donc toujours accroché à la tige 13, et le verrou 10 est encore verrouillé.

Lorsque la poignée 17 est en position partiellement ouverte, un angle défini entre un troisième plan, formé par l'axe 14 d'accroche et le deuxième axe 16, et la paroi 20 de la poignée 17 est d'environ quinze degrés. L'angle permet à l'opérateur de glisser la main sous la poignée 17 pour la saisir.

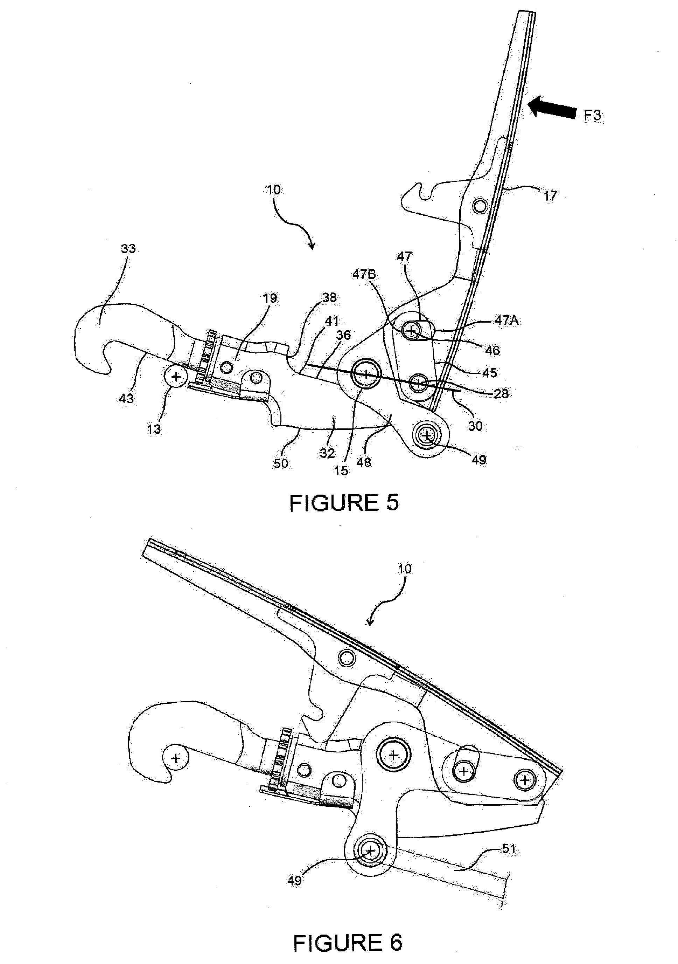

Dans un deuxième temps, pour assurer le déverrouillage du verrou 10, l'opérateur tire sur l'extrémité libre de la poignée 17 (figure 4, flèche F2), opposée au troisième axe 28, de sorte à faire pivoter davantage la poignée 17. Le quatrième axe 46 solidaire de la première et de la deuxième bielle (45, 48) bascule alors au-dessus du deuxième plan 30, entraîné par la deuxième extrémité 47B de l'ouverture 47 oblongue. Simultanément, la paroi 43 du crochet 33 glisse sur la tige 13 afin de s'en libérer, le cinquième axe 49 glisse sur la deuxième face 50 de la partie 32 distale du bras 19 de verrouillage, et la troisième face 41 de la rainure 36 de la partie 32 distale glisse sur la barre 15, jusqu'à ce que la barre 15 soit au contact de la deuxième butée 40. Une fois la barre 15 au contact de la deuxième butée 40, le verrou 10 est déverrouillé et la structure mobile peut être ouverte (figure 5).

Le verrouillage du verrou 10 depuis la position déverrouillée se déroule comme suit.

L'opérateur appuie dans un premier temps sur l'extrémité libre de la poignée 17 opposée au troisième axe 28 (figure 5, flèche F3), de sorte à rapprocher la poignée 17 du bras 19 de verrouillage. Au cours de la rotation de la poignée 17, le quatrième axe 46 solidaire de la première et de la deuxième bielle (45, 48), initialement au contact de la deuxième extrémité 47B de l'ouverture 47 oblongue, entre en contact avec la première extrémité 47A de l'ouverture 47 oblongue. Puis, le quatrième axe 46 bascule en-dessous du deuxième plan 30, entraîné par la première extrémité 47A de l'ouverture 47 oblongue, quand l'opérateur continue d'appuyer sur la poignée. Simultanément, la paroi 43 du crochet 33 glisse sur la tige 13 afin de l'agripper, le cinquième axe 49 glisse sur la deuxième face 50 de la partie 32 distale du bras 19 de verrouillage, et la troisième face 41 de la rainure 36 glisse sur la barre 15, jusqu'à ce que la barre 15 soit au contact de la première butée 38 et que le quatrième axe 46 soit au contact de la deuxième butée 40. De manière également simultanée, les crochets 26 de la gâchette 18 s'engagent sur les ergots 27 du bras 19 de verrouillage. Le verrou 10 est alors verrouillé avec la poignée 17 en position fermée, en une seule phase.

La cinématique du verrou 10 est particulièrement avantageuse, car elle permet d'assurer une avancée du crochet 33 par rapport à la tige 13 importante grâce à l'utilisation d'un système mécanique de serrage à deux genouillères, tout en permettant à la poignée 17 d'être intégrée à une structure présentant un petit rayon de courbure.

La figure 6 montre un verrou 10 comportant en outre une bielle 51 de commande reliée au cinquième axe 49.

La bielle 51 de commande est par exemple une bielle à rotules ou un câble, de sorte que la bielle 51 de commande peut pivoter autour du cinquième axe 49 dans toutes les directions. La bielle 51 de commande peut être reliée à un drapeau, dont la sortie hors de la structure indique visuellement que le verrou 10 est effectivement déverrouillé. La bielle 51 de commande peut alternativement être reliée à un verrou adjacent, et apte à commander son ouverture.

Lors de l'ouverture ou la fermeture du verrou 10, la bielle 51 de commande se déplace avec le cinquième axe 49, entraînant dans son déplacement une partie mobile du mécanisme auquel elle est reliée.

Ainsi, le déverrouillage et le verrouillage d'un verrou 10 précédemment décrit et muni d'une bielle 51 de commande permet de commander simultanément le déclenchement d'un autre mécanisme, sans que l'opérateur n'ait à enclencher un autre mécanisme.

## Revendications

1. Verrou (10) pour le verrouillage et le déverrouillage d'une structure mobile sur une structure (11) fixe d'un véhicule, l'une des deux structures portant un premier axe (14) d'accroche, l'autre structure portant un deuxième axe (16) de liaison pivot autour duquel le verrou est apte à pivoter, le verrou comportant :
- un bras (19) de verrouillage comprenant un crochet (33) apte à s'accrocher au premier axe d'accroche ;
- une poignée (17) portant un troisième axe (28) de liaison pivot, autour duquel le bras de verrouillage est apte à être guidé en rotation, et un quatrième axe (46) de liaison pivot, disposé entre la poignée et une première face (35) du bras de verrouillage ;
- une première bielle (45) reliant le troisième axe (28) de liaison pivot au quatrième axe (46) de liaison pivot ;
- une deuxième bielle (48) reliant le quatrième axe (46) de liaison pivot au deuxième axe (16) de liaison pivot ;
le verrou étant **caractérisé en ce que** le deuxième axe (16) est disposé du côté de la poignée (17) par rapport à un plan (29) formé entre le premier axe (14) d'accroche et le troisième axe (28) de liaison pivot, et **en ce que** la deuxième bielle (48) comprend un cinquième axe (49) disposé contre une deuxième face (50) du bras de verrouillage opposée à la première face (35).

2. Verrou selon la revendication 1, dans lequel la deuxième bielle (48) est sensiblement en forme de L.

3. Verrou selon la revendication 1 ou la revendication 2, dans lequel le cinquième axe (49) est apte à glisser sur la deuxième face (50) du bras de verrouillage, lorsque le crochet vient s'accrocher ou se décrocher du premier axe (14) d'accroche.

4. Verrou selon l'une des revendication 1 à 3, dans lequel le bras de verrouillage comporte une partie (32) distale opposée au crochet (33), comprenant une rainure (36) formant une première butée (38) apte à bloquer le deuxième axe (16) en translation en direction du crochet, et une deuxième butée (40) apte à bloquer en translation ledit deuxième axe dans une direction opposée au crochet.

5. Verrou selon la revendication 4, dans lequel une longueur de la deuxième bielle (48) est définie de sorte que, lorsque le crochet est accroché au premier axe (14) d'accroche, le deuxième axe (16) est en appui contre la première butée (38).

6. Verrou selon la revendication 4, dans lequel une longueur de la deuxième bielle (48) est définie de sorte que, lorsque le crochet (33) n'est pas accroché au premier axe (14) d'accroche, le deuxième axe (16) est en appui contre la deuxième butée (40).

7. Verrou selon l'une des revendications précédentes, dans lequel la poignée (17) comprend des parois (23) latérales présentant chacune une ouverture (47) oblongue, le quatrième axe (46) de liaison pivot étant apte à coulisser dans lesdites ouvertures.

8. Verrou selon l'une des revendications précédentes, dans lequel la deuxième face (50) du bras de verrouillage présente un profilé sensiblement convexe, depuis une première extrémité (50A) située à proximité du crochet (33) jusqu'à une deuxième extrémité (50B) opposée à ladite première extrémité, située à proximité du troisième axe (28) de liaison pivot.

9. Verrou selon l'une des revendications précédentes, dans lequel le cinquième axe (49) est relié à une bielle (51) de commande, apte à commander le déclenchement d'un mécanisme adjacent lorsque le verrou est enclenché dans une position de verrouillage ou de déverrouillage.

## Patentansprüche

1. Schließvorrichtung (10) zur Verriegelung und Entriegelung einer mobilen Struktur an bzw. von einer Struktur (11), die an einem Fahrzeug befestigt ist, wobei eine der beiden Strukturen einen ersten Kupplungsbolzen (14) trägt und die andere Struktur einen zweiten Schwenkverbindungsbolzen (16), um den die Schließvorrichtung schwenken kann, trägt, wobei die Schließvorrichtung Folgendes umfasst:
- einen Verriegelungsarm (19), der einen Haken (33) umfasst, der mit dem ersten Kupplungsbolzen gekoppelt werden kann;
- einen Griff (17), der einen dritten Schwenkverbindungsbolzen (28), um den der Verriegelungsarm drehbar geführt werden kann, und einen vierten Schwenkverbindungsbolzen (46), der zwischen dem Griff und einer ersten Fläche (35) des Verriegelungsarms angeordnet ist, trägt;
- eine erste Verbindungsstange (45), die den dritten Schwenkverbindungsbolzen (28) mit dem vierten Schwenkverbindungsbolzen (46) verbindet;
- eine zweite Verbindungsstange (48), die den vierten Schwenkverbindungsbolzen (46) mit dem zweiten Schwenkverbindungsbolzen (16) verbindet;
wobei die Schließvorrichtung **dadurch gekennzeichnet ist, dass** der zweite Bolzen (16) bezüglich einer zwischen dem ersten Kupplungsbolzen (14) und dem dritten Schwenkverbindungsbolzen (28) gebildeten Ebene (29) auf der Seite des Griffs (17) angeordnet ist und dass die zweite Verbindungsstange (48) einen fünften Bolzen (49) aufweist, der gegen eine zweite Seite (50) des Verriegelungsarms gegenüber der ersten Seite (35) angeordnet ist.

2. Schließvorrichtung nach Anspruch 1, wobei die zweite Verbindungsstange (48) im Wesentlichen L-förmig ist.

3. Schließvorrichtung nach Anspruch 1 oder Anspruch 2, wobei der fünfte Bolzen (49) bei Kopplung des Hakens mit dem ersten Kupplungsbolzen (14) oder dessen Entkopplung davon auf der zweiten Seite (50) des Verriegelungsarms gleiten kann.

4. Schließvorrichtung nach einem der Ansprüche 1 bis 3, wobei der Verriegelungsarm einen distalen Teil (32) gegenüber dem Haken (33) umfasst, der eine Nut (36) aufweist, die einen ersten Anschlag (38), der eine Translationsbewegung des zweiten Bolzens (16) in Richtung des Hakens sperren kann, und einen zweiten Anschlag (40), der eine Translationsbewegung des zweiten Bolzens in einer dem Haken entgegengesetzten Richtung sperren kann, bildet.

5. Schließvorrichtung nach Anspruch 4, wobei eine Länge der zweiten Verbindungsstange (48) so definiert ist, dass der zweite Bolzen (16) am ersten Anschlag (38) anliegt, wenn der Haken mit dem ersten Kupplungsbolzen (14) gekoppelt ist.

6. Schließvorrichtung nach Anspruch 4, wobei eine Länge der zweiten Verbindungsstange (48) so definiert ist, dass der zweite Bolzen (16) am zweiten Anschlag (40) anliegt, wenn der Haken (33) nicht mit dem ersten Kupplungsbolzen (14) gekoppelt ist.

7. Schließvorrichtung nach einem der vorhergehenden Ansprüche, wobei der Griff (17) Seitenwände (23) aufweist, die jeweils eine längliche Öffnung (47) aufweisen, wobei der vierte Schwenkverbindungsbolzen (46) in diesen Öffnungen gleiten kann.

8. Schließvorrichtung nach einem der vorhergehenden Ansprüche, wobei die zweite Seite (50) des Verriegelungsarms ein im Wesentlichen konvexes Profil aufweist, von einem in der Nähe des Hakens (33) befindlichen ersten Ende (50A) bis zu einem zweiten Ende (50B) gegenüber dem ersten Ende, das sich in der Nähe des dritten Schwenkverbindungsbolzens (28) befindet.

9. Schließvorrichtung nach einem der vorhergehenden Ansprüche, wobei der fünfte Bolzen (49) mit einer Betätigungsstange (51) verbunden ist, die das Auslösen eines benachbarten Mechanismus bewirken kann, wenn die Schließvorrichtung in einer Verriegelungs- oder Entriegelungsposition eingerastet ist.

## Claims

1. Lock (10) for locking a moveable structure to and unlocking it from a stationary structure (11) of a vehicle, one of the two structures bearing a first coupling pin (14), the other structure bearing a second pivot connection pin (16) about which the lock is able to pivot, the lock comprising:
- a locking arm (19) comprising a hook (33) able to be coupled to the first coupling pin;
- a handle (17) bearing a third pivot connection pin (28) about which the locking arm is able to be guided in rotation, and a fourth pivot connection pin (46) arranged between the handle and a first face (35) of the locking arm;
- a first connecting rod (45) connecting the third pivot connection pin (28) to the fourth pivot connection pin (46);
- a second connecting rod (48) connecting the fourth pivot connection pin (46) to the second pivot connection pin (16);
the lock being **characterized in that** the second pin (16) is arranged on the handle (17) side with respect to a plane (29) formed between the first coupling pin (14) and the third pivot connection pin (28), and **in that** the second connecting rod (48) comprises a fifth pin (49) arranged against a second face (50) of the locking arm that is opposite to the first face (35).

2. Lock according to Claim 1, in which the second connecting rod (48) is substantially L-shaped.

3. Lock according to Claim 1 or Claim 2, in which the fifth pin (49) is able to slide on the second face (50) of the locking arm when the hook is coupled to or uncoupled from the first coupling pin (14).

4. Lock according to one of Claims 1 to 3, in which the locking arm comprises a distal part (32) opposite to the hook (33), comprising a groove (36) forming a first stop (38) able to prevent the second pin (16) from moving translationally in the direction of the hook, and a second stop (40) able to prevent the said second pin from moving translationally in an opposite direction to the hook.

5. Lock according to Claim 4, in which a length of the second connecting rod (48) is defined such that, when the hook is coupled to the first coupling pin (14), the second pin (16) bears against the first stop (38).

6. Lock according to Claim 4, in which a length of the second connecting rod (48) is defined such that, when the hook (33) is not coupled to the first coupling pin (14), the second pin (16) bears against the second stop (40).

7. Lock according to one of the preceding claims, in which the handle (17) comprises lateral walls (23) each having an oblong opening (47), the fourth pivot connection pin (46) being able to slide in the said openings.

8. Lock according to one of the preceding claims, in which the second face (50) of the locking arm has a substantially convex profile, starting from a first end (50A) situated in the vicinity of the hook (33) to a second end (50B) opposite to the said first end, situated in the vicinity of the third pivot connection pin (28).

9. Lock according to one of the preceding claims, in which the fifth pin (49) is connected to a control rod (51) able to trigger an adjacent mechanism when the lock is engaged in a locking or unlocking position.
